# EUROPÄISCHE PATENTSCHRIFT

(11) **EP 2 271 873 B1**
(45) Veröffentlichungstag und Bekanntmachung des Hinweises auf die Patenterteilung: **09.11.2011**
(21) Anmeldenummer: 09727001.1
(22) Anmeldetag: 30.03.2009
(51) Int. Cl.: F21V 25/04, F21V 23/04

(54) **BELEUCHTUNG FÜR EINE PRÜFVORRICHTUNG**
ILLUMINATION FOR A TEST DEVICE
ECLAIRAGE POUR UN DISPOSITIF D'ESSAI

(30) Priorität: 31.03.2008 DE 102008016461
(43) Veröffentlichungstag der Anmeldung: 12.01.2011
(73) Patentinhaber: Giesecke & Devrient GmbH, 81677 München (DE)
(72) Erfinder: ENGELHARDT, Franz, 82319 Starnberg (DE)
(86) Internationale Anmeldenummer: PCT/EP2009/002306
(87) Internationale Veröffentlichungsnummer: WO 2009/121545

(56) Entgegenhaltungen:
- EP-A2- 0 762 174
- GB-A- 2 353 726
- US-A1- 2004 165 393

## Beschreibung

Die vorliegende Erfindung betrifft eine Beleuchtung für eine Prüfvorrichtung sowie ein Verfahren für die Steuerung einer derartigen Beleuchtung.

Bei den genannten Prüfvorrichtungen handelt es sich beispielsweise um automatische Sortier-, Prüf- und/oder Zählanlagen für Blattgut, wie insbesondere Banknoten, Schecks, Ausweise, Aktien-/Wertpapiere oder andere Dokumente. Außerdem sind Prüfvorrichtungen betroffen, die generell dazu verwendet werden können, Gegenstände auf das Vorhandensein oder Fehlen bestimmter Eigenschaften zu überprüfen. Die weitere Beschreibung erfolgt beispielhaft für die zuerst erwähnten Prüfvorrichtungen für Blattgut

Um innerhalb solcher Vorrichtungen das Blattgut beispielsweise auf Art, Echtheit, Gültigkeit oder Beschädigung zu prüfen, werden in der Regel unter anderem optische Sensoreinrichtungen eingesetzt. In den Sensoreinrichtungen wird das Blattgut mit speziellen Lichtquellen beleuchtet und das vom Blattgut reflektierte oder durch das Blattgut transmittierte Licht von entsprechenden Sensoren gemessen und ausgewertet. Für spektroskopischen Untersuchungen wird dabei Licht mit bestimmten Wellenlängen und möglichst hoher Strahlungsleistung benötigt.

Eine Vorrichtung zur Beleuchtung von Blattgut wird in der EP 0 762174 A2 beschrieben. Die Beleuchtung besteht dabei im wesentlichen aus mehreren Spiegelsegmenten zylindrischer Spiegel mit elliptischer Grundfläche, die jeweils zwei Fokuslinien aufweisen. Die Spiegelsegmente sind so angeordnet, daß sowohl die ersten als auch die zweiten Fokuslinien aller Spiegelsegmente jeweils in einer ersten bzw. zweiten Fokuslinie zusammenfallen. In der ersten gemeinsamen Fokuslinie wird eine Lichtquelle, bestehend aus einer Reihe von Leuchtdioden, angeordnet. Das von den Leuchtdioden emittierte Licht wird durch Reflexion an den Spiegelsegmenten auf das in der zweiten gemeinsamen Fokuslinie befindliche Blattgut fokussiert und so eine linienförmige Beleuchtung für das Blattgut mit einer relativ hohen Beleuchtungsstärke erzeugt. Hierbei handelt es sich jedoch um einen relativ aufwendigen und empfindlichen Aufbau. Durch die Verwendung von Leuchtdioden als Lichtquelle ist die Strahlungsleistung begrenzt.

Zur Erhöhung der Nachweisempfindlichkeit in der Sensoreinrichtung sind jedoch höhere Strahlungsleistungen notwendig. Dies ist beispielsweise durch einen Einsatz von intensiveren Lichtquellen, insbesondere Laserlichtquellen, im sichtbaren (400 bis 700 nm) und infraroten (700 bis 1400 nm) oder ultravioletten (300 bis 400 nm) Bereich möglich. Hierbei bietet sich insbesondere die Verwendung von Laserdioden der Laserklassen 3b und 4, von Nd:YAG-Lasern, oder anderen Festkörperlasern mit kontinuierlicher oder gepulster Abstrahlung an. Bei einem Einsatz von Lasern ergibt sich jedoch wegen der hohen Strahlungsleistung und der guten Fokussierbarkeit des abgestrahlten Lichts eine relativ große Gefährdung für die Augen von Bedienern bzw. von Servicepersonal der Anlagen. Für herkömmliche Laserbeleuchtung gelten daher zur Sicherstellung des Augenschutzes restriktive Leistungsbeschränkungen, die entweder nur sehr niedrige Laserleistung erlauben - was dem Einsatzzweck gerade entgegenläuft - oder umfangreiche Sicherheitsmaßnahmen erfordern.

Eine Möglichkeit, den Schutz der Mitarbeiter sicherzustellen, besteht darin, die Türen einer geschlossenen Anlage mit Unterbrechungsschaltern zu versehen, die zu einer Abschaltung der Laser führen, wenn die Türen geöffnet werden. Insbesondere bei den genannten Blattgutbearbeitungsvorrichtungen ist es jedoch häufig erforderlich, bei offenen Türen Servicearbeiten durchzuführen. Dies ist zum Beispiel dann der Fall, wenn die Transportstrecke des Blattguts eingestellt wird bzw. Stellen innerhalb der Transportstrecke gesucht werden müssen, an denen Blattgut beschädigt wird, oder die Sensoreinrichtungen oder Teile davon gereinigt werden müssen, weil diese durch die Bearbeitung des Blattguts verschmutzt wurden. Diese Servicearbeiten gestalten sich jedoch unter Umständen sehr schwierig, weil durch das automatische Ausschalten der Laserlichtquellen in der Sensoreinrichtung die während des normalen Betriebs vorliegenden Verhältnisse verändert werden. Beispielsweise ist es in einem derartigen Fall für Servicepersonal nur sehr schwer zu erkennen, daß beispielsweise die Sensoreinrichtung oder Teile davon verschmutzt sind und gereinigt werden müssen. Eine derartige Lichtquelle, die beim Öffnen des sie enthaltenden Gehäuses ausgeschaltet wird, ist z. B. aus US 2004/165393 A1 bekannt.

Der Erfindung liegt die Aufgabe zugrunde, eine Beleuchtung für eine Prüfvorrichtung und ein Verfahren für deren Steuerung zu schaffen, die trotz eines Einsatzes von intensiven Beleuchtungen, insbesondere Laserlichtquellen, den Augenschutz von Bedienern oder Servicepersonal gewährleisten, bei denen jedoch auch im Servicefall Verhältnisse vorliegen, die den Verhältnissen während des normalen Betriebs weitestgehend entsprechen.

Diese Aufgabe wird durch eine Beleuchtung für eine Prüfvorrichtung sowie ein Verfahren für deren Steuerung gemäß den unabhängigen Ansprüchen gelöst. In den abhängigen Ansprüchen sind vorteilhafte Ausgestaltungen der Erfindung angegeben.

Die Erfindung geht hierbei von einer Beleuchtung für eine Prüfvorrichtung sowie einem Verfahren für deren Steuerung aus, mit einer mindestens eine Lichtquelle enthaltenden Sensoreinrichtung, wobei die mindestens eine Lichtquelle Licht mit hoher Strahlungsleistung abstrahlt, welches eine Gefahr für die Augen von Bedienern oder Servicepersonal darstellt, wobei ein Gehäuse, das die mindestens eine Lichtquelle enthält, und einen Austritt von Licht der Lichtquelle verhindert, überwacht wird, ob das Gehäuse geöffnet ist, wobei die mindestens eine Lichtquelle mit hoher Strahlungsleistung ausgeschaltet wird, falls eine Öffnung des Gehäuses bei der Überwachung festgestellt wird, welche einen Austritt von Licht der Lichtquelle ermöglicht. Dabei ist es vorgesehen, daß gleichzeitig oder später eine Beleuchtung, die eine Strahlungsleistung aufweist, die keine Gefahr für die Augen von Bedienern oder Servicepersonal darstellt, eingeschaltet wird.

Die Erfindung weist insbesondere den Vorteil auf, daß zu jedem Zeitpunkt ein Schutz der Augen von Bedienern oder Servicepersonal gewährleistet ist. Durch die Beleuchtung auch im Servicefall wird sichergestellt, daß die während des Servicefalls vorliegenden Verhältnisse weitestgehend den Verhältnissen entsprechen, die während des normalen Betriebs vorliegen. Dadurch wird es Bedienern oder Servicepersonal erleichtert, die notwendigen Arbeiten durchzuführen.

Die Erfindung wird nachfolgend unter Hinweis auf die beigefügten Zeichnungen anhand einer Ausführungsform näher erläutert. Die nachfolgende Verwendung des Begriffs "Laser" ist so zu verstehen, daß alle Lichtquellen erfaßt sind, die aufgrund ihrer Strahlungsleistung unter die Laserschutzbestimmungen fallen bzw. eine Lichtleistung aufweisen, die so hoch ist, daß die Augen von Bedienern oder Servicepersonal der Prüfvorrichtung dadurch gefährdet sind.

Es zeigt
- Figur 1: eine schematische Darstellung einer Prüfvorrichtung für Blattgut mit mindestens einer Beleuchtung, und
- Figur 2: eine Ausführungsform einer Beleuchtung für eine Prüfvorrichtung.

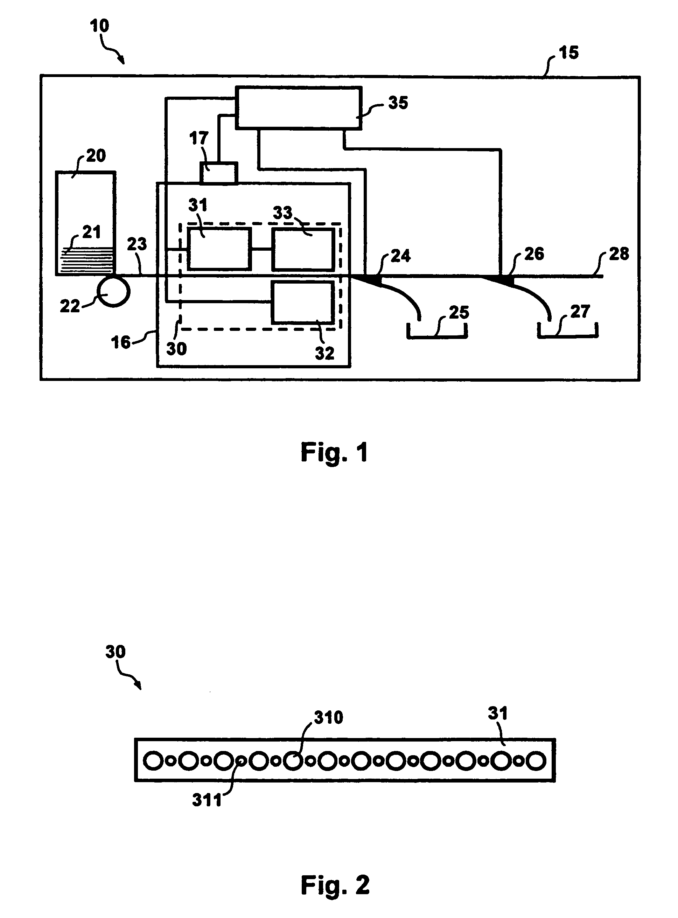

Figur 1 zeigt eine schematische Darstellung eines prinzipiellen Aufbaus einer Vorrichtung 10 für die Überprüfung von Banknoten, insbesondere der Überprüfung der Echtheit der Banknoten.

Die Vorrichtung 10 für die Überprüfung von Banknoten ist als Banknotenbearbeitungsmaschine ausgebildet und weist ein Eingabefach 20 für die Eingabe von zu bearbeitenden Banknoten 21 auf, in welches ein Vereinzeler 22 eingreift. Der Vereinzeler 22 erfaßt jeweils eine der zu bearbeitenden Banknoten 21 und übergibt die einzelne Banknote an ein Transportsystem 23, welches die einzelne Banknote durch eine Sensoreinrichtung 30 transportiert.

In der Sensoreinrichtung 30 sind beispielsweise verschiedene Sensoren 31, 32, 33 vorhanden, die unterschiedliche Eigenschaften der Banknoten überprüfen können. So kann beispielsweise ein erster Sensor 31, der von einer ersten Seite der Banknote remittiertes Licht erfaßt, ein zweiter Sensor 32, der von einer zweiten Seite der Banknote remittiertes Licht erfaßt, und ein dritter Sensor 33, der durch die Banknote transmittiertes Licht erfaßt, vorhanden sein. Die Sensoren 31, 32, 33 führen für die Überprüfung der Banknoten Messungen durch, bei der sie Eigenschaften jeder einzelnen Banknote erfassen und entsprechende Daten erzeugen. Dazu können die Sensoren 31, 32, 33 die Banknoten mit einer bestimmten Auflösung z. B. zeilenförmig in Form von Bildpunkten abtasten. Jeder der Sensoren 31, 32, 33 kann dabei mindestens eine Lichtquelle enthalten, welche für die Überprüfung der Banknoten Licht einer bestimmten Wellenlänge oder eines bestimmten Wellenlängenbereichs erzeugt. Die Lichtquellen können insbesondere Laserlichtquellen sein. Bei der anhand von Figur 1 beschriebenen Prüfvorrichtung ist beispielsweise mindestens eine Lichtquelle im ersten Sensor 31 enthalten, für die Beleuchtung der dem ersten Sensor 31 zugewandten ersten Seite der jeweils zu prüfenden Banknote. Ebenso ist beispielsweise mindestens eine Lichtquelle im zweiten Sensor 32 enthalten, für die Beleuchtung der dem zweiten Sensor 32 zugewandten zweiten Seite der jeweils zu prüfenden Banknote. Im dritten Sensor 33 kann auf eine Lichtquelle verzichtet werden, da der dritte Sensor 33 durch die jeweils zu prüfende Banknote transmittiertes Licht erfaßt. Im vorliegenden Beispiel stammt dieses Licht von der Lichtquelle des dem dritten Sensor 33 gegenüberliegenden zweiten Sensor 32.

Aus den erfaßten Bildpunkten jeder der Banknoten können von den Sensoren 31, 32, 33 und/ oder einer Steuereinrichtung 35 Daten gebildet werden, welche jeden Ort auf der Oberfläche der jeweiligen Banknote repräsentieren. Die Erzeugung der Daten kann z. B. für eine Seite der Banknoten erfolgen, d. h. für eine der Oberflächen der Banknoten, ebenso können beide Oberflächen erfaßt und entsprechende Daten zur Verfügung gestellt werden. Bevorzugt werden die Seiten bzw. Oberflächen der Banknoten jeweils vollständig erfaßt und entsprechende Daten für die vollständige Seite bzw. Oberfläche erzeugt.

Aus den Daten der Sensoren 31, 32, 33 werden von der Steuereinrichtung 35 Eigenschaften abgeleitet, die für die Überprüfung der Banknoten relevant sind. Diese Eigenschaften charakterisieren den Zustand der Banknoten, wie z. B. Verschmutzung, Flecken, Lappigkeit, Risse, Klebestreifen, Eselsohren, Löcher, fehlende Bestandteile der Banknoten usw., die Art der Banknoten, wie z. B. Währung, Denomination, Serie usw., und insbesondere die Echtheit der Banknoten. Die jeweiligen Eigenschaften können beispielsweise aus den Daten eines oder mehrerer der Sensoren 31, 32, 33 abgeleitet werden.

In der Steuereinrichtung 35 werden die Daten der Sensoren 31, 32, 33 verarbeitet und mit in der Steuereinrichtung 35 gespeicherten Referenzdaten verglichen, woraufhin die Steuereinrichtung 35 den Zustand der Banknoten ermittelt, insbesondere ob die Banknoten echt sind.

Anhand der von der Steuereinrichtung 35 durchgeführten Überprüfung der jeweiligen Banknote werden im Transportsystem 23 angeordnete Weichen 24, 26 angesteuert, z. B. um echte Banknoten in einem ersten Ausgabefach 25 abzulegen, wohingegen gefälschte und/oder fälschungsverdächtige Banknoten in einem zweiten Ausgabefach 27 abgelegt werden können. Über das Transportsystem 23 können die Banknoten auch einer weiteren Bearbeitung 28 zugeführt werden, z. B. der Zerstörung mittels eines Schredders oder der Ablage in weiteren Ausgabefächern.

Figur 2 zeigt eine Ausführungsform einer Beleuchtung 311 für eine Prüfvorrichtung, die beispielsweise Bestandteil des ersten Sensors 31 ist. Wie zuvor beschrieben, erfaßt der erste Sensor 31 von zu prüfenden Banknoten remittiertes Licht, das von der im ersten Sensor 31 enthaltenen Lichtquelle stammt. Die Lichtquelle kann ebenfalls Bestandteil des ersten Sensors 31 sein und beispielsweise von mehreren zeilenförmig angeordneten Laserdioden 310 gebildet werden. Wie zuvor beschrieben, beleuchten die die Lichtquelle bildenden Laserdioden 310 die zu prüfenden Banknoten streifenförmig. Zusätzlich können weitere optische Elemente wie Spiegel, Linsen usw. vorhanden sein, um das Licht der Laserdioden 310 in einer gewünschten Weise zu fokussieren.

Die Vorrichtung 10 für die Überprüfung von Banknoten befindet sich in einem Gehäuse 15, welches beispielsweise nur das Eingabefach 20 sowie die Ausgabefächer 25, 27 freigibt. Licht welches von der oder den Lichtquellen der Sensoreinrichtung 30 bzw. der Sensoren 31, 32, 33 stammt, kann während des Betriebs der Vorrichtung 10 nicht aus dem Gehäuse 15 austreten. Dadurch wird gewährleistet, daß die eingangs beschriebene Gefährdung für die Augen von Bedienern bzw. von Servicepersonal verhindert wird. Öffnet der Bediener bzw. das Servicepersonal eine Türe oder Klappe 16 des Gehäuses 15, um Arbeiten im Bereich der Sensoren 31, 32, 33 vorzunehmen, z. B. um dort gestaute Banknoten zu entfernen, werden die Lichtquellen der Sensoren 31, 32, 33 von der Steuereinrichtung 35 ausgeschaltet, sobald eine mit der Tür bzw. Klappe 16 verbundene Einrichtung für die Überwachung 17, z. B. ein Unterbrechungsschalter, signalisiert, daß die Tür bzw. Klappe 16 geöffnet wird. Somit kann auch für den Fall der Öffnung des Gehäuses 15 sichergestellt werden, daß keine Gefährdung der Augen von Bedienern bzw. von Servicepersonal auftreten kann.

Alternativ oder zusätzlich kann auch die Sensoreinrichtung 30 ein Gehäuse aufweisen, welches den Austritt von Licht mit hoher Strahlungsleistung während des Betriebs verhindert. In diesem Fall kann das Gehäuse der Sensoreinrichtung 30, wie zuvor für das Gehäuse 15 der Vorrichtung beschrieben, überwacht werden, um die Lichtquellen der Sensoren 31, 32, 33 auszuschalten, sobald Licht der Lichtquellen aus dem Gehäuse treten kann. Ebenso können die einzelnen Sensoren 31, 32, 33 überwacht und ihre Lichtquellen können ausgeschaltet werden, falls der Austritt des Lichts der Lichtquellen möglich ist

Nachdem die Lichtquellen der Sensoren 31, 32, 33 von der Steuereinrichtung 35 abgeschaltet wurden, kann der Bediener bzw. das Servicepersonal ohne Gefährdung Arbeiten innerhalb der Vorrichtung 10 und insbesondere an den Sensoren 31, 32, 33 vornehmen. Bei diesen Arbeiten kann es für den Bediener bzw. das Servicepersonal aber von Nachteil sein, wenn die Lichtquellen der Sensoren 31, 32, 33 ausgeschaltet sind. Beispielsweise kann die Entfernung von Schmutz, der sich auf den Sensoren 31, 32, 33 abgelagert hat, erschwert werden, da der Bediener bzw. das Servicepersonal den Schmutz nicht ohne weiteres erkennt.

Die in Figur 2 dargestellte Beleuchtung 311 besteht beispielsweise aus Leuchtdioden, die ähnlich wie die Laserdioden 310 zeilenförmig angeordnet sind, z. B. jeweils eine Leuchtdiode 311 zwischen zwei Laserdioden 310. Die Beleuchtung 311 wird von der Steuereinrichtung 35 gleichzeitig, oder nachdem die die Lichtquellen der Sensoren 31, 32, 33 bildenden Laserdioden 310 ausgeschaltet worden sind, eingeschaltet. Die Sensoren 31, 32, 33 werden dann von der Beleuchtung 311 beleuchtet, obwohl die eigentlich für den Betrieb verwendeten Lichtquellen ausgeschaltet sind. Servicearbeiten an den Sensoren 31, 32, 33, z. B. die Reinigung eines Sensorfensters, sind in diesem Fall besonders gut möglich, da der Bediener bzw. das Servicepersonal die Verschmutzung z. B. eines Sensorfensters wegen der Beleuchtung des Sensorfensters durch die Beleuchtung 311 leicht erkennt.

Vorteilhaft wird die Beleuchtung 311 so ausgestaltet, daß sie Licht der gleichen Wellenlänge oder eines gleichartigen Wellenlängenbereichs erzeugt, wie es von der jeweiligen Lichtquelle des Sensors 31, 32, 33 erzeugt wird. Erzeugen die Lichtquellen des jeweiligen Sensors 31, 32, 33 Licht im nichtsichtbaren Bereich, z. B. UV- oder IR-Licht, kann die Beleuchtung 311 so gewählt werden, daß sie Licht im sichtbaren Bereich erzeugt.

In der in Figur 2 dargestellten Ausführungsform weist die Beleuchtung 311 einen zeilenförmigen Aufbau auf, der dem Aufbau der die Lichtquelle des ersten Sensor 31 bildenden Laserdioden 310 entspricht. Es ist offensichtlich, daß für die Beleuchtung 311 ein abweichender Aufbau gewählt werden kann. Beispielsweise können mehr oder weniger Lichtquellen für die Beleuchtung 311 verwendet werden, als der jeweilige Sensor Lichtquellen 310 aufweist, oder die Lichtquellen der Beleuchtung 311 können eine von den Lichtquellen 310 des jeweiligen Sensors abweichende räumliche Anordnung aufweisen. Ebenso können an Stelle von Leuchtdioden für die Beleuchtung 311 andere Lichtquellen verwendet werden.

Abweichend von der bisher beschriebenen Ausführungsform, bei der die Beleuchtung 311 von zusätzlichen Lichtquellen gebildet wird, können auch die Lichtquellen der Sensoren 31, 32, 33 selbst für die Beleuchtung während einer Unterbrechung des normalen Betriebs verwendet werden, bei der Licht aus dem Gehäuse 15 bzw. den Sensoren 31, 32, 33 austreten kann. Dazu kann es beispielsweise vorgesehen sein, daß die Lichtquellen der Sensoren 31, 32, 33 mit einem geringeren Strom oder einer geringeren Spannung betrieben werden, so daß die Strahlungsleistung der Lichtquellen unterhalb einer die Augen des Bedieners bzw. Servicepersonals gefährdenden Leistung bleibt. Bei dieser Lösung kann sich jedoch das Problem ergeben, daß bei fehlerhafter Ansteuerung der Lichtquellen der Sensoren 31, 32, 33 die zulässige maximale Strahlungsleistung überschritten wird. Aus diesem Grund wird die zuvor beschriebene Lösung bevorzugt, bei der eine von den Lichtquellen der Sensoren 31, 32, 33 unabhängige, zusätzliche Beleuchtung vorgesehen ist, deren Lichtquellen 311 die zulässige maximale Strahlungsleistung bauartbedingt nicht überschreiten können.

Aus Sicherheitsgründen kann es auch vorgesehen sein, daß die mindestens eine Lichtquelle mit hoher Strahlungsleistung direkt von der Einrichtung für die Überwachung 17 ausgeschaltet wird, sobald diese ermittelt, daß Licht der Lichtquelle die Augen des Bedieners bzw. Servicepersonals gefährden könnte. Dabei kann auch die Beleuchtung 311 direkt von der Einrichtung für die Überwachung 17 eingeschaltet werden.

Wird nach Abschluß der Servicearbeiten das Gehäuse 16 der Vorrichtung 10 für die Prüfung bzw. das Gehäuse der Sensoreinrichtung 30 geschlossen, kann der normale Betrieb wieder aufgenommen werden. Dabei wird die Beleuchtung 311 ausgeschaltet und die mindestens eine Lichtquelle mit hoher Strahlungsleistung wird wieder eingeschaltet.

## Patentansprüche

1. Beleuchtung für eine Prüfvorrichtung mit mindestens einem Sensor (31, 32, 33), der mindestens eine Lichtquelle (310) mit hoher Strahlungsleistung aufweist, welche eine Gefahr für die Augen von Bedienern oder Servicepersonal darstellt, wobei die mindestens eine Lichtquelle in einem Gehäuse (15, 30) angeordnet ist, welches einen Austritt von Licht der Lichtquelle verhindert, einer Einrichtung (17) für die Überwachung des die mindestens eine Lichtquelle enthaltenden Gehäuses (15, 30), um die mindestens eine Lichtquelle auszuschalten, falls das Gehäuse (15,30) geöffnet wird, **dadurch gekennzeichnet, daß** gleichzeitig oder später eine Beleuchtung (311) eingeschaltet wird, die eine Strahlungsleistung aufweist, die keine Gefahr für die Augen von Bedienern oder Servicepersonal darstellt.

2. Beleuchtung für eine Prüfvorrichtung nach Anspruch 1, **dadurch gekennzeichnet, daß** die Einrichtung (17) für die Überwachung des Gehäuses (15, 30) ein Unterbrechungsschalter ist.

3. Beleuchtung für eine Prüfvorrichtung nach Anspruch 1 oder 2, **dadurch gekennzeichnet, daß** die Beleuchtung (311) von Leuchtdioden gebildet wird.

4. Beleuchtung für eine Prüfvorrichtung nach einem der Ansprüche 1 bis 3, **dadurch gekennzeichnet, daß** die Eigenschaften der Beleuchtung (311) den Eigenschaften der mindestens einen Lichtquelle entsprechen.

5. Beleuchtung für eine Prüfvorrichtung nach Anspruch 4, **dadurch gekennzeichnet, daß** die Beleuchtung (311) eine Wellenlänge oder einen Wellenlängenbereich aufweist, welcher der Wellenlänge oder dem Wellenlängenbereich der mindestens einen Lichtquelle entspricht.

6. Beleuchtung für eine Prüfvorrichtung nach Anspruch 4 oder 5, **dadurch gekennzeichnet, daß** das Licht der Beleuchtung (311) eine räumliche Verteilung aufweist, welche der räumlichen Verteilung des Lichts der mindestens einen Lichtquelle entspricht.

7. Beleuchtung für eine Prüfvorrichtung nach einem der Ansprüche 1 bis 6, **dadurch gekennzeichnet, daß** die Beleuchtung Bestandteil des mindestens einen Sensors (31, 32, 33) ist.

8. Beleuchtung für eine Prüfvorrichtung nach einem der Ansprüche 1 bis 7, **dadurch gekennzeichnet, daß** die Beleuchtung sichtbares Licht erzeugt.

9. Verfahren für die Steuerung einer Beleuchtung für eine Prüfvorrichtung, mit einer mindestens eine Lichtquelle (310) enthaltenden Sensoreinrichtung (30), wobei die mindestens eine Lichtquelle Licht mit hoher Strahlungsleistung abstrahlt, welches eine Gefahr für die Augen von Bedienern oder Servicepersonal darstellt, mit folgenden Schritten Überwachen eines die mindestens eine Lichtquelle enthaltenden Gehäuses (15, 30), welches einen Austritt von Licht der Lichtquelle verhindert, ob das Gehäuse (15, 30) geöffnet ist, Ausschalten der mindestens einen Lichtquelle mit hoher Strahlungsleistung, falls eine Öffnung des Gehäuses (15, 30) bei der Überwachung festgestellt wird, welche einen Austritt von Licht der Lichtquelle ermöglicht, und gleichzeitiges oder spätres Einschalten einer Beleuchtung (311), die eine Strahlungsleistung aufweist, die keine Gefahr für die Augen von Bedienern oder Servicepersonal darstellt.

10. Verfahren nach Anspruch 9, **dadurch gekennzeichnet, daß** das Licht der Beleuchtung (311) Eigenschaften aufweist, die den Eigenschaften der mindestens einen Lichtquelle entsprechen.

11. Verfahren nach Anspruch 10, **dadurch gekennzeichnet, daß** die Beleuchtung (311) eine Wellenlänge oder einen Wellenlängenbereich aufweist, welcher der Wellenlänge oder dem Wellenlängenbereich der mindestens einen Lichtquelle entspricht.

12. Verfahren nach Anspruch 10 oder 11, **dadurch gekennzeichnet, daß** das Licht der Beleuchtung (311) eine räumliche Verteilung aufweist, welche der räumlichen Verteilung des Lichts der mindestens einen Lichtquelle entspricht.

13. Verfahren nach einem der Ansprüche 9 bis 12, **dadurch gekennzeichnet, daß** die Beleuchtung sichtbares Licht erzeugt.

## Claims

1. A lighting means for a checking device having at least one sensor (31, 32, 33) which has at least one light source (310) with high radiant power which represents a danger to the eyes of operators or service personnel, wherein the at least one light source is arranged in a housing (15, 30) which prevents an emergence of light of the light source, a device (17) for the monitoring of the housing (15, 30) containing the at least one light source, in order to switch off the at least one light source if the housing (15, 30) is opened, **characterized in that** there is switched on at the same time or later a lighting means (311) which has a radiant power not representing any danger to the eyes of operators or service personnel.

2. The lighting means for a checking device according to claim 1, **characterized in that** the device (17) for the monitoring of the housing (15, 30) is an interrupt switch.

3. The lighting means for a checking device according to claim 1 or 2, **characterized in that** the lighting means (311) is formed by light emitting diodes.

4. The lighting means for a checking device according to any of claims 1 to 3, **characterized in that** the properties of the lighting means (311) correspond to the properties of the at least one light source.

5. The lighting means for a checking device according to claim 4, **characterized in that** the lighting means (311) has a wavelength or a wavelength range which corresponds to the wavelength or the wavelength range of the at least one light source.

6. The lighting means for a checking device according to claim 4 or 5, **characterized in that** the light of the lighting means (311) has a spatial distribution which corresponds to the spatial distribution of the light of the at least one light source.

7. The lighting means for a checking device according to any of claims 1 to 6, **characterized in that** the lighting means is component of the at least one sensor (31, 32, 33).

8. The lighting means for a checking device according to any of claims 1 to 7, **characterized in that** the lighting means produces visible light.

9. A method for the control of a lighting means for a checking device, with a sensor device (30) containing at least one light source (310), wherein the at least one light source radiates light with high radiant power which represents a danger to the eyes of operators or service personnel, having the following steps
monitoring a housing (15, 30), which contains the at least one light source and prevents an emergence of light of the light source, as to whether the housing (15, 30) is open,
switching off the at least one light source with high radiant power if there is detected upon the monitoring an opening of the housing (15, 30), which permits an emergence of light of the light source, and switching on at the same time or later a lighting means (311) which has a radiant power not representing any danger to the eyes of operators or service personnel.

10. The method according to claim 9, **characterized in that** the light of the lighting means (311) has properties which correspond to the properties of the at least one light source.

11. The method according to claim 10, **characterized in that** the lighting means (311) has a wavelength or a wavelength range which corresponds to the wavelength or the wavelength range of the at least one light source.

12. The method according to claim 10 or 11, **characterized in that** the light of the lighting means (311) has a spatial distribution which corresponds to the spatial distribution of the light of the at least one light source.

13. The method according to any of claims 9 to 12, **characterized in that** the lighting means produces visible light.

## Revendications

1. Éclairage pour un dispositif d'essai avec au moins un capteur (31, 32, 33) qui présente au moins une source lumineuse (310) ayant une puissance de rayonnement élevée qui constitue un risque pour les yeux des opérateurs ou du personnel d'entretien, la ou lesdites sources lumineuses étant disposées dans un boîtier (15, 30) qui empêche la lumière de la ou des sources lumineuses de sortir, et un système (17) de surveillance du boîtier (15, 30) contenant la ou lesdites sources lumineuses afin de désactiver la ou lesdites sources lumineuses en cas d'ouverture du boîtier (15, 30), **caractérisé en ce qu'**un éclairage (311) dont la puissance de rayonnement ne constitue pas un risque pour les yeux des opérateurs ou du personnel d'entretien est activé en même temps ou plus tard.

2. Éclairage pour un dispositif d'essai selon la revendication 1, **caractérisé en ce que** le système (17) de surveillance du boîtier (15, 30) est un interrupteur de coupure.

3. Éclairage pour un dispositif d'essai selon la revendication 1 ou la revendication 2, **caractérisé en ce que** l'éclairage (311) est constitué de diodes électroluminescentes.

4. Éclairage pour un dispositif d'essai selon l'une des revendications 1 à 3, **caractérisé en ce que** les propriétés de l'éclairage (311) correspondent aux propriétés de la ou des sources lumineuses.

5. Éclairage pour un dispositif d'essai selon la revendication 4, **caractérisé en ce que** l'éclairage (311) présente une longueur d'onde ou une plage de longueur d'onde qui correspond à la longueur d'onde ou à la plage de longueur d'onde de la ou des sources lumineuses.

6. Éclairage pour un dispositif d'essai selon la revendication 4 ou la revendication 5, **caractérisé en ce que** la lumière de l'éclairage (311) présente une distribution spatiale qui correspond à la distribution spatiale de la lumière de la ou des sources lumineuses.

7. Éclairage pour un dispositif d'essai selon l'une des revendications 1 à 6, **caractérisé en ce que** l'éclairage fait partie intégrante du ou des capteurs (31, 32, 33).

8. Éclairage pour un dispositif d'essai selon l'une des revendications 1 à 7, **caractérisé en ce que** l'éclairage génère de la lumière visible.

9. Procédé de commande d'un éclairage pour un dispositif d'essai, avec un système de capteurs (30) contenant au moins une source lumineuse (310), la ou lesdites sources lumineuses émettant de la lumière avec une puissance de rayonnement élevée qui constitue un risque pour les yeux des opérateurs ou du personnel d'entretien, ledit procédé comprenant les étapes consistant à :
surveiller un boîtier (15, 30) contenant la ou lesdites sources lumineuses et empêchant la lumière de la ou des sources lumineuses de sortir si le boîtier (15, 30) est ouvert,
désactiver la ou lesdites sources lumineuses à puissance de rayonnement élevée lorsque la surveillance fait apparaître une ouverture du boîtier (15, 30) qui permet à la lumière de la ou des sources lumineuses de sortir, et activer en même temps ou plus tard un éclairage (311) dont la puissance de rayonnement ne constitue pas un risque pour les yeux des opérateurs ou du personnel d'entretien.

10. Procédé selon la revendication 9, **caractérisé en ce que** la lumière de l'éclairage (311) présente des propriétés qui correspondent aux propriétés de la ou des sources lumineuses.

11. Procédé selon la revendication 10, **caractérisé en ce que** l'éclairage (311) présente une longueur d'onde ou une plage de longueur d'onde qui correspond à la longueur d'onde ou à la plage de longueur d'onde de la ou des sources lumineuses.

12. Procédé selon la revendication 10 ou la revendication 11, **caractérisé en ce que** la lumière de l'éclairage (311) présente une distribution spatiale qui correspond à la distribution spatiale de la lumière de la ou des sources lumineuses.

13. Procédé selon l'une des revendications 9 à 12, **caractérisé en ce que** l'éclairage génère de la lumière visible.
